# DEMANDE DE BREVET EUROPEEN

(11) **EP 3 292 980 A1**
(43) Date de publication de la demande: **14.03.2018**
(21) Numéro de dépôt: 16188491.1
(22) Date de dépôt: 13.09.2016
(51) Int. Cl.: B29C 47/02, B29C 47/90, B29C 47/08, B29C 63/06

(54) **PROCÉDÉ ET DISPOSITIF D'EXTRUSION ET D'ÉTIQUETAGE D'UN PRODUIT CYLINDRIQUE**

(71) Demandeur: Aisapack Holding SA, 1896 Vouvry (CH)
(72) Inventeur: THOMASSET, Jacques, 74500 Neuvecelle (FR); REY, Eduardo, 1896 Vouvry (CH)
(74) Mandataire: Grosfillier, Philippe

(57) **Abrégé**

Le procédé d'extrusion et d'étiquetage d'un tube d'emballage comprend les étapes successives suivantes:
a) formation d'une étiquette (12) partiellement ou totalement tubulaire à partir d'un film dans un conformateur (20); b) introduction de l'étiquette dans un élément de calibration (22); c) extrusion d'un corps tubulaire (13) du côté de la face concave de l'étiquette (12) dans une tête d'extrusion (24); d) mise en contact de la face externe du corps tubulaire extrudé avec la face concave de l'étiquette. Dans le procédé, l'étiquette (12) comprend au moins une couche dont la température de fusion est d'au moins 20°C supérieure à la température de fusion du corps tubulaire extrudé (13).

## Description

### DOMAINE TECHNIQUE ET ÉTAT DE LA TECHNIQUE

L'invention se situe dans le domaine des tubes ou des cylindres, et plus particulièrement dans le domaine des tubes d'emballage pour produits liquides ou visqueux, comme des pâtes-dentifrice ou des crèmes, dont la jupe est obtenue par extrusion de matière.

Les tubes flexibles d'emballage présentent généralement deux parties distinctes, à savoir une jupe ou corps cylindrique flexible reliés à une tête comportant un goulot qui est fermé par un bouchon. La jupe du tube est obtenue soit par extrusion d'un corps tubulaire, soit par soudage d'une feuille multicouche qui est enroulée pour former ce corps tubulaire avant la soudure bord-à-bord ou par chevauchement.

Il existe plusieurs procédés pour ajouter et fixer une tête de tube à l'extrémité d'une jupe préalablement extrudée. La tête de tube peut être moulée par compression ou injection et conjointement soudée sur la jupe par surmoulage. Un autre procédé consiste à pré-fabriquer la tête de tube par injection ou compression moulage, puis à assembler la tête de tube sur la jupe par soudage.

Le tube ainsi formé est ensuite décoré au niveau de la jupe, notamment par l'utilisateur final du tube et on utilise couramment des techniques d'impression pour ajouter le décor souhaité. Lorsque la jupe est obtenue par extrusion d'un corps tubulaire, l'opération d'impression se fait avant ou après l'assemblage de la jupe avec la tête de tube. Cette opération d'impression présente plusieurs inconvénients liés au fait que l'impression n'est pas réalisée à plat mais sur la géométrie tubulaire de la jupe. Cela conduit généralement à un procédé de plus grande complexité et par conséquent à un équipement onéreux, à des cadences de production plus faibles, et à une flexibilité réduite du processus de fabrication. Le manque de flexibilité des machines d'impression conduit par exemple à des opérations de reprises pour des décorations complexes telles que la sérigraphie ou la décoration à chaud.

Afin de surmonter les difficultés de décoration par impression, une méthode alternative consiste à appliquer une étiquette adhésive pré-imprimée sur le tube. L'étiquette qui est associée à un film support généralement en PET est séparée du support lors de l'application sur la surface externe du tube. L'étiquette est pré-enduite avec un adhésif collant qui lie l'étiquette à la surface du tube. La couche adhésive est protégée par le film support avant l'application de l'étiquette sur le tube.

A titre d'exemple, le procédé divulgué dans la demande de brevet WO 2007/092652 consiste à appliquer une fine étiquette qui n'est pas encollée sur un film support avant utilisation. Selon cette méthode, l'opération d'enduction ou d'activation de la couche adhésive a lieu au moment de l'application de l'étiquette sur la surface du tube. Une variante de ce procédé consiste à appliquer la couche adhésive sur l'étiquette au moment de l'application. Une autre variante consiste à appliquer la couche adhésive sur la surface du tube avant application de l'étiquette. Le procédé décrit dans WO 2007/082652 présente cependant plusieurs inconvénients. L'ajout par enduction d'une couche adhésive au moment de l'application de l'étiquette ou l'ajout d'une étape d'activation rend plus complexe le procédé de fabrication, en particulier lors de l'application sur une ligne d'extrusion de tube en continu (figure 2 de WO 2007/092652). Un autre inconvénient réside dans les temps d'activation très courts de la couche adhésive que requiert cette méthode ce qui peut conduire à un choix restreint et coûteux d'adhésifs. Un autre inconvénient se situe au niveau de l'emballage: l'étiquette qui est ajoutée sur la surface du tube ne fait pas partie intégrante de la paroi de l'emballage. Les bords de l'étiquette sont parfois visibles ou détectables par le toucher et nuisent aux propriétés de décoration et esthétique de l'emballage.

La demande de brevet EP 0 457 561 présente une méthode et un dispositif pour la confection de corps tubulaires extrudés ayant un film laminé en surface. Cette méthode consiste former un premier corps tubulaire à partir d'un film, à extruder un liner à l'intérieur dudit corps tubulaire, à étirer le liner radialement, à mettre en pression le liner contre le corps tubulaire. Cette méthode présente plusieurs inconvénients. Un premier inconvénient est lié au fait que le liner doit être extrudé à l'intérieur du corps tubulaire formé par le film. Cette opération requiert un diamètre de tube suffisamment grand pour placer dans le tube les outillages nécessaires à l'extrusion et étirage radial du liner du liner extrudé. La méthode proposée dans cette antériorité ne permet pas la réalisation de tubes de petit diamètre et en particulier de tubes de diamètre inférieur à 35mm. EP 0 457 561 propose également un calibrage interne du diamètre du tube. Outre les notions d'encombrement citées précédemment, cette méthode présente l'inconvénient de générer de faibles variations du diamètre extérieur du tube. Ces variations qui dépendent de la régularité du débit de l'extrudeuse peuvent engendrer des défauts de décoration. En effet, pour obtenir une décoration de haute qualité, les extrémités du film décor qui se trouve en surface externe du corps tubulaire doivent être ajustées bout à bout. Or, les variations de débit d'extrusion citées précédemment ont pour effet de faire varier le diamètre extérieur du corps tubulaire, donc d'écarter ou rapprocher les extrémités du film décor. Ces variations engendrent des défauts visuels au niveau de la jonction des extrémités du film décor.

Des inconvénients similaires sont constatés dans les procédés et dispositifs décrits dans les demandes de brevet DE 1 504 918 et DE 10 2006 006 993 par exemple.

La demande internationale WO 2015/159234 au nom d'AISAPACK HOLDING SA décrit un procédé et un dispositif d'extrusion et d'étiquetage d'un tube d'emballage obtenu par extrusion, cette publication étant incorporée par référence en son entier dans la présente demande.

Le procédé décrit dans cette publication permet la décoration de jupes de tubes extrudés grâce à un procédé économique et flexible. Il consiste associer des opérations d'extrusion à des opérations d'étiquetage afin d'aboutir à un corps tubulaire décoré. L'étiquette peut être constituée d'un film décor monocouche ou multicouche. Le film décor est intégré à l'emballage lors de l'extrusion à l'état fondu du corps tubulaire, de telle sorte que la surface extérieure de l'emballage décoré forme une surface continue sans aspérité. Grâce au procédé de cette publication le film décor fait partie intégrante de l'emballage contrairement à une étiquette usuelle qui serait ajoutée sur un emballage déjà formé.

De préférence dans WO 2015/159234, le film décor qui forme tout ou partie de la surface externe du corps tubulaire est soudé au corps tubulaire grâce à la chaleur de la résine extrudée. Selon un mode de réalisation, le film décor entre en contact avec l'extrudât fondu avant la phase de refroidissement, avant l'étape de calibration.

Le procédé selon WO 2015/159234 résulte de l'association d'un processus d'extrusion et d'un processus d'étiquetage. Le procédé consiste à mettre en contact l'étiquette autour du corps tubulaire à l'état fondu, de préférence après l'opération de conformation du film en géométrie tubulaire. Avantageusement, on calibre et refroidit la structure tubulaire multicouche résultante afin d'obtenir un tube extrudé décoré.

Selon un mode de WO 2015/159234, le procédé comporte une première étape de conformation du film en géométrie partiellement ou totalement tubulaire, suivie d'une deuxième étape d'extrusion d'un corps tubulaire à l'état fondu; puis d'une troisième étape consistant à mettre en contact la surface externe du corps tubulaire à l'état fondu contre la surface interne (concave) de l'étiquette et enfin d'une quatrième étape de calibration consistant à appliquer la surface externe de l'étiquette destinée à former la surface externe du tube contre la surface interne du calibre. La troisième étape est réalisée par une différence de pression entre les surfaces interne et externe du corps tubulaire. La quatrième étape est réalisée par une différence de pression entre la surface interne et la surface externe du tube.

Le procédé selon WO 2015/159234 consiste donc à fabriquer un corps tubulaire extrudé ayant une étiquette film décor qui peut composer toute sa surface externe. Ainsi le corps tubulaire est totalement enveloppé dans l'étiquette lors de son passage dans le calibre et les bacs de refroidissement successifs. La matière fondue n'est pas en frottement sur les outillages refroidis, ce qui permet d'améliorer l'esthétique des emballages produits, leur résistance aux impacts et au stress cracking.

Dans WO 2015/159234, une première différence de pression est utilisée pour mettre en contact le corps tubulaire et l'étiquette. Cette première différence de pression s'exerce au moins entre la sortie de l'extrudât du bec de l'outillage et la zone de contact entre la surface interne du film et la surface externe de l'extrudât. Cette première différence de pression permet d'éviter l'emprisonnement de bulles d'air entre l'étiquette et la surface externe du corps tubulaire. Selon un mode de réalisation de l'invention, la différence de pression est créée par une pression d'air positive à l'intérieur du tube. Un mode de réalisation alternatif pour créer cette différence de pression consiste à créer une chambre de dépression entre l'extrudeuse et l'élément de calibration. Selon un mode de réalisation, la mise en contact entre le corps tubulaire et l'étiquette est réalisée immédiatement après la conformation du film en géométrie tubulaire.

Selon une variante du procédé le film est conformé en géométrie tubulaire conjointement au gonflage du corps tubulaire sur la surface interne du film. Selon cette variante, le plan de contact (plan formé par la zone de contact) entre le film et le corps tubulaire est incliné par rapport à l'axe du tube contrairement à l'art antérieur ou le plan de contact est toujours perpendiculaire à l'axe du tube.

Avantageusement, une deuxième différence de pression est exercée pour plaquer la surface externe du tube contre la surface interne de l'élément de calibration et éviter la rétraction du tube lors du refroidissement. Cette étape dite de calibration permet d'ajuster avec précision le diamètre extérieur du tube. Dans le procédé selon WO 2015/159234, la surface externe du tube est formée par l'étiquette qui vient glisser sur la surface interne du calibre. Le tube est ensuite refroidi, coupé, selon les méthodes habituelles.

Néanmoins, il s'est avéré que des améliorations aux procédés connus pouvaient être mises en oeuvre pour augmenter la qualité des produits obtenus et réduire les défauts de production.

### Définitions

Dans présent texte le terme "étiquetage" se réfère à la fixation d'un film, ledit film étant également nommé "film décor" ou "étiquette", sur un tube. Le terme "décor" se réfère à un élément visuel à caractère informatif et/ou esthétique et/ou de sécurité (comme un marquage) présent notamment sur le film.

### SOMMAIRE DE L'INVENTION

Un but de l'invention est donc d'améliorer les procédés de production de tubes comportant une étiquette.

Un autre but de l'invention est de proposer un procédé de production de tubes par extrusion dans une étiquette de forme tubulaire qui est amélioré par rapport à celui connu de WO 2015/159234 et aux produits obtenus avec ce procédé de l'état de la technique.

Le principe du procédé selon la présente invention est similaire à celui décrit dans la publication WO 2015/159234 qui est incorporée par référence dans la présente demande, procédé auquel des modifications ont été apportées comme décrit ci-après.

Dans un mode d'exécution, l'invention concerne un procédé d'extrusion et d'étiquetage d'un tube d'emballage comprenant les étapes successives suivantes réalisées sur une ligne d'extrusion-étiquetage:
a) formation d'une étiquette partiellement ou totalement tubulaire à partir d'un film dans un conformateur;
b) introduction de l'étiquette dans un élément de calibration;
c) extrusion d'un corps tubulaire du côté de la face concave de l'étiquette dans une tête d'extrusion;
d) mise en contact de la face externe du corps tubulaire extrudé avec la face concave de l'étiquette, procédé dans lequel l'étiquette comprend au moins une couche dont la température de fusion est d'au moins 20°C supérieure à la température de fusion du corps tubulaire extrudé.

Dans un mode d'exécution, l'étape d) est réalisée au moyen d'un jet d'air

Dans un mode d'exécution, l'étape d) est réalisée également au moyen d'une première différence de pression (ΔP1) que l'on instaure entre l'intérieur et l'extérieur du corps tubulaire.

Dans un mode d'exécution, la première différence de pression (ΔP1) est générée par un premier bouchon situé en aval du conformateur qui obstrue au moins partiellement l'échappement de l'air par l'intérieur du corps tubulaire.

Dans un mode d'exécution, la première différence de pression est générée également par un échappement contrôlé de l'air du côté amont du conformateur, au travers de la tête d'extrusion.

Dans un mode d'exécution, le bouchon est maintenu à l'intérieur du tube par des forces magnétiques.

Dans un mode d'exécution, le premier bouchon se situe après un moyen de traction du tube.

La première différence de pression (ΔP1) facilite ainsi la traction du tube par le moyen de traction.

Dans un mode d'exécution, on instaure une deuxième différence de pression ΔP2 entre l'intérieur et l'extérieur du tube.

Dans un mode d'exécution, la deuxième différence de pression ΔP2 est créée par une dépression dans un bac à vide.

Dans un mode d'exécution, l'étape c) est réalisée dans l'élément de calibration.

Dans un mode d'exécution, l'élément de calibration est refroidi.

Dans un mode d'exécution, l'élément de calibration comporte une surface de contact qui permet de réduire le frottement avec l'étiquette.

Dans un mode d'exécution, la surface de frottement entre l'élément de calibration et l'étiquette n'est pas lubrifiée ou au moins partiellement lubrifiée ou elle est grainée.

Dans un mode d'exécution, la lubrification de la surface de frottement de l'élément de calibration réalisée au moins par de l'eau de refroidissement.

Dans un mode d'exécution, l'eau servant à la lubrification et au refroidissement est au moins partiellement déminéralisée.

Dans un mode d'exécution, l'eau servant à la lubrification et au refroidissement est de l'eau obtenue par osmose.

Dans un mode d'exécution, la tension de l'étiquette à l'entrée du conformateur est régulée.

Dans un mode d'exécution, l'invention concerne un dispositif pour la mise en oeuvre d'un procédé tel que décrit dans la présente demande, le dispositif comprenant au moins un bouchon qui obstrue au moins partiellement l'échappement de l'air par l'intérieur du corps tubulaire formé, le bouchon étant maintenu en position fixe dans le dispositif malgré le déplacement longitudinal du corps tubulaire formé dans le dispositif.

Dans un mode d'exécution, le dispositif comprend une douille magnétique qui bloque le mouvement du bouchon.

Dans un mode d'exécution, le bouchon comprend des moyens magnétiques coopérant avec la douille magnétique pour bloquer le mouvement du bouchon.

De préférence, l'étiquette est de fine épaisseur par rapport à l'épaisseur du corps tubulaire extrudé.

Dans mode d'exécution, le tube formé de l'étiquette et du corps extrudé subit un traitement thermique pour optimiser sa rondeur.

L'étiquette se présente de préférence sous la forme d'un film multicouche avec une couche interne et une couche externe. Lorsqu'elle est mise en contact avec le corps extrudé à l'état fondu, la surface du film ou la couche interne formant l'interface avec le corps tubulaire est chauffée à une température permettant de souder ledit corps tubulaire sur le film décor. Selon un mode préféré, toute la chaleur nécessaire au soudage est apportée par le corps tubulaire. Du fait de sa fine épaisseur, l'étiquette est refroidie sur sa surface externe (convexe) conjointement à l'opération de soudage. Le refroidissement se fait par contact de la surface externe de l'étiquette sur la surface interne du calibre ou par contact avec de l'eau. Le refroidissement de l'étiquette conjointement à l'opération de soudage permet de préserver la qualité du décor ainsi que les propriétés de surface de l'étiquette (brillance, matité, rugosité...).

Avantageusement l'étiquette est intégrée dans l'épaisseur de l'emballage et couvre toute la surface extérieure du corps tubulaire.

Selon un mode de réalisation de l'invention, l'étiquette ne forme qu'une partie de la circonférence du corps tubulaire, ses bords sont emprisonnés par la résine extrudée de telle sorte que la surface externe du corps tubulaire forme une surface continue.

L'étiquette peut apporter de la décoration à l'emballage. Elle peut également apporter des propriétés de surface modifiant "le toucher" de l'emballage. A cet égard, l'invention permet d'apporter en surface de l'emballage d'autres matières impossible ou difficile à extruder telles que du papier, des textiles, des résines "soft touch", etc. Ces propriétés peuvent être avantageuses pour du marquage ou pour former un élément de sécurité.

L'étiquette est avantageusement utilisée pour ses propriétés barrières. Ce mode de réalisation évite l'usage d'un dispositif de co-extrusion du corps tubulaire.

Un autre avantage de l'invention est de faciliter l'extrusion de grades de résines difficile à extruder car générant des phénomènes de "stick and slip" lors du calibrage ou générant des défauts de surface, ou encore des ruptures d'extrudât.

De manière plus générale, l'invention peut être utilisée pour augmenter la productivité car la matière fondue n'est plus en contact direct avec la surface du calibre. Les frottements de la matière fondue sur l'élément de calibration que l'on retrouve dans un procédé classique d'extrusion sont supprimés si bien que la vitesse de production peut être augmentée.

Les emballages résultant de ce procédé de fabrication offrent une très forte cohésion entre l'étiquette et le corps tubulaire. Les risques de décollement de l'étiquette lors de l'usage de l'emballage sont écartés contrairement aux emballages de l'art antérieur que l'on produit avec une étiquette adhésive. Un autre avantage est lié à l'absence de discontinuité à la surface du corps tubulaire, ce qui permet d'éviter les désagréments liés aux étiquettes dont les tranches peuvent accumuler la poussière et nuire aux propriétés esthétiques.

L'invention permet en outre de réaliser des tubes décorés de faible ou grand diamètre. Elle offre une très grande flexibilité, et peut faire l'objet de nouvelles installations ou permettre la modification d'installations d'extrusion existantes.

L'invention consiste également en un dispositif d'extrusion-étiquetage tel que définit dans les revendications. Le dispositif réalisé selon un mode préférentiel comprend des moyens d'extrusion d'un corps tubulaire à l'état fondu; un bac de calibration et refroidissement sous vide; des moyens d'entrainement du tube refroidi; des moyens de coupe ou d'enroulement et des moyens pour dérouler un film; un conformateur en col de cygne disposé entre la tête d'extrusion et le bac de calibration sous vide; des moyens pour exercer une première différence de pression entre l'intérieur et l'extérieur du corps tubulaire extrudé; des moyens pour exercer une deuxième différence de pression entre l'intérieur et l'extérieur du tube lors de son passage dans le bac de calibration sous vide.

De préférence l'étiquette passe au travers d'un conformateur en col de cygne disposé entre le bec d'extrusion et l'élément de calibration. Grâce au conformateur en col de cygne, l'étiquette ne passe pas dans les outillages d'extrusion ce qui évite la dégradation du film décor. Dans la présente invention, le conformateur en col de cygne permet de prolonger les outillages d'extrusion à l'intérieur de la géométrie tubulaire formée par le film. L'usage d'un conformateur en col de cygne est avantageux pour plusieurs raisons. Il évite le contact entre le film et les outillages chauds, et de par sa compacité il permet de réduire la longueur de l'outillage appelée bec qui se prolonge à l'intérieur du col de cygne. Les pertes de charges et par conséquent les pressions générées par l'écoulement de la matière fondue dans l'outillage sont fortement diminuées.

Selon une variante de l'invention, le conformateur en col de cygne, associé à une différence de pression entre l'intérieur et l'extérieur du corps tubulaire, permet d'associer le corps tubulaire au film décor dans le col de cygne. Un avantage de cette façon de faire est la possibilité de positionner le conformateur en col de cygne à proximité de la tête d'extrusion afin de prendre en charge le corps tubulaire dès sa sortie de l'outillage. Le corps tubulaire est déposé sur le film qui glisse sur le col de cygne et entraîne conjointement le corps tubulaire. La compacité du conformateur en col de cygne est d'un grand avantage. Ce conformateur peut être inséré facilement entre la tête d'extrusion et l'élément de calibration.

Une autre variante de l'invention consiste à extruder un corps tubulaire avec une résine comportant des agents d'expansion. Ces agents d'expansion ont pour effet de créer un gonflement du corps tubulaire à l'état fondu et ainsi mettre en contact la face externe du corps tubulaire à l'état fondu avec la face interne ou la couche interne du film. Selon cette variante, la mise en contact de la couche externe du corps tubulaire avec la face ou couche interne du film est créée préférentiellement par les agents d'expansion contenus dans la résine et non pas par une différence de pression. De même, la calibration du diamètre extérieur est créée préférentiellement par l'action des agents d'expansion, mais peut résulter également d'une différence de pression entre la surface interne du corps tubulaire et la surface externe du film, ou par la combinaison de l'action des agents d'expansion et d'une différence de pression. Cette variante de l'invention est particulièrement avantageuse pour alléger les emballages sans avoir l'inconvénient d'un aspect dégradé par les agents d'expansion. En effet, le film décoré qui forme la surface externe de l'emballage apporte les propriétés de surface et de décoration, et l'usage d'agents d'expansion permet de diminuer la quantité de résine formant le corps tubulaire extrudé et formant la couche interne de l'emballage.

L'invention ne se limite pas au dépôt d'un film sur un corps tubulaire à l'état fondu. Une autre variante de l'invention consiste à déposer le film décor sur la surface externe d'un corps extrudé plein comportant des agents d'expansion. Par exemple le film décor est déposé sur la surface externe d'un corps cylindrique extrudé comportant des agents d'expansion. L'expansion du corps cylindrique à la sortie de l'outillage d'extrusion provoque la mise en contact de la couche interne du film avec la surface externe du corps extrudé. Conjointement ou successivement, le diamètre extérieur du corps cylindrique décoré est ajusté grâce au passage du corps cylindrique dans un calibre et un bac de refroidissement. Cette variante de l'invention est particulièrement avantageuse pour la réalisation de pièces d'emballages comme les bouchons synthétique utilisés les bouteilles en verre. Un marché important est celui du vin. L'optimisation de ce type de bouchon peut nécessiter la différentiation des propriétés de surface (glissement, étanchéité, décoration), des propriétés à coeur (contact avec le vin, élasticité, compression, résistance).

Le film décor peut être déposé sur des corps extrudés de section ronde, ovale, carrée ou de géométrie plus complexe.

### BREVE DESCRIPTION DES DESSINS

L'invention sera mieux comprise par la description de mode d'exécutions de celle-ci en référence aux dessins dans lesquels
La figure 1 illustre un schéma-bloc d'un mode d'exécution du procédé selon l'invention.
La figure 2 illustre une vue schématique de côté d'une machine d'extrusion selon la présente invention.
La figure 3 illustre un détail d'un mode d'exécution de l'invention.
La figure 4 illustre un autre détail d'un mode d'exécution de l'invention.
La figure 5 illustre un tube représenté en coupe et obtenu grâce à l'invention.
La figure 6 illustre un tube obtenu avec le procédé décrit dans l'invention dont les extrémités du film décor sont encastrées dans le corps tubulaire.
La figure 7 illustre un détail de la figure 6.
La figure 8 illustre une vue en coupe partielle d'un tube comprenant un film décor en surface dont les extrémités sont disposées bout à bout. Les extrémités sont encastrées dans le corps tubulaire.
La figure 9 montre une variante d'un tube comprenant un film décor dont les extrémités sont disposées bout à bout. Selon cette variante, les extrémités sont en contact et la surface externe du tube forme une surface lisse continue.

### DESCRIPTION DETAILLEE

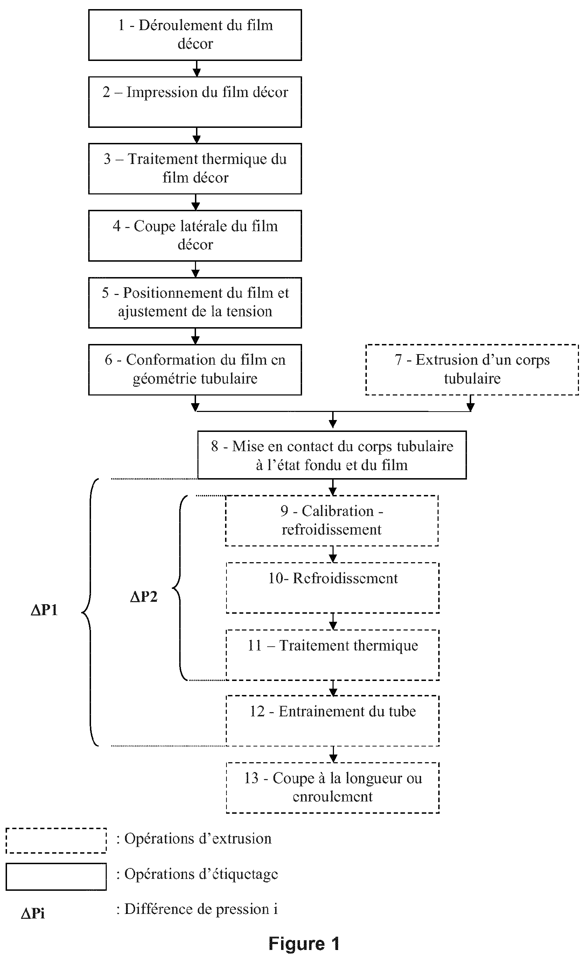

La figure 1 illustre un mode d'exécution du procédé de l'invention sous forme de schéma-blocs représentant les étapes du procédé.

Dans une première étape (1), on déroule un film décor (à savoir ce qui formera l'étiquette) d'une bobine, ce qui est la façon habituelle de produire de tels films décor pour de tels tubes.

Dans le processus selon l'invention, on procède à la deuxième étape (2) qui peut être optionnelle, dans laquelle on effectue notamment une opération d'impression du film décor. Le film décor peut être imprimé selon toutes les méthodes connues d'impression à plat comme par exemple (et de façon non-limitative): la flexographie, la sérigraphie, l'héliogravure, l'impression par typographie, l'impression offset, hot stamping, cold foil, ou encore l'impression digitale et combinaison de ces technologies d'impression. L'invention sera associée avantageusement à l'impression numérique pour les productions nécessitant flexibilité et changement rapide de décoration. L'impression peut être aussi recouverte par un vernis protecteur.

Dans le processus selon l'invention, on procède à une troisième étape, qui peut être optionnelle, dans laquelle on effectue un traitement thermique du film décor. Cette étape consiste notamment à chauffer le film à une température généralement comprise entre 60 et 160°C. Cette température dépend de la structure du film utilisé et des résines. De préférence, on utilise une température de traitement thermique inférieure à la température de fusion du film. Lorsque le film est multicouche, c'est généralement la couche ayant la tenue thermique la plus faible qui définit la température du traitement. Par exemple, pour un film décor de structure multicouche PET/PE, une température de traitement thermique inférieure à 120°C est utilisée. Un exemple de dispositif pour effectuer le traitement thermique consiste à faire passer le film sur un rouleau régulé à la température du traitement thermique. De préférence, la face du film non imprimée est mise en contact avec la surface du rouleau chaud. Un second rouleau peut être utilisé en aval pour refroidir le film avant l'étape (4). L'étape de traitement thermique (3) est optionnelle et est utilisée pour relaxer les contraintes pouvant être présentes dans le film suite aux opérations d'impression et de fabrication du film décor. Le traitement thermique peut être également utilisé pour diminuer le frottement du film dans les outillages de conformation (étape 7) et de calibration (étapes 8 et 9). En effet, le traitement thermique peut avoir pour effet l'amélioration du séchage ou la réticulation de la couche d'impression.

Dans le processus de déroulement, on procède à une quatrième étape (4), qui peut être optionnelle, dans laquelle on coupe l'un ou les deux bords latéraux du film déroulé. Cette étape permet d'ajuster de façon précise les dimensions du film à celles du tube qui sera produit, et par exemple de former au moins un bord de référence sur le film, ou encore d'enlever un bord (ou les deux) qui pourraient être abîmés et de s'affranchir de ce risque lié au transport et à la manutention des bobines de film.

Dans l'étape suivante (5), on positionne le film de façon précise et on ajuste sa tension en vue de sa conformation en géométrie tubulaire qui est l'étape (6) illustrée. L'ajustement en tension est un paramètre important pour obtenir la géométrie tubulaire souhaitée sans tensions internes dans le film décor 12 et donc sans déformation ultérieure du film conformé dans sa géométrie d'étiquette.

En parallèle, dans l'étape (7), on forme un corps tubulaire 13 par extrusion à l'intérieur du film décor 12 qui a été conformé en géométrie tubulaire.

Selon l'invention, le corps tubulaire 13 est extrudé directement dans le film 12 qui est dans sa conformation tubulaire et l'étape (8) comprend la mise en contact de la surface externe du corps extrudé 13 avec la surface interne ou la couche interne du film 12 en conformation tubulaire.

Dans l'étape suivante (9), le film 12 et le corps tubulaire extrudé 13 subissent une opération de calibration dans un calibre 22 pour fixer le diamètre final du produit et une opération de refroidissement dans le calibre 22.

Dans l'étape suivante (10), le tube formé et calibré continue de subir une opération de refroidissement. Pendant l'étape 10, il peut être avantageux d'ajouter des éléments de reformage qui ont pour effet d'optimiser la rondeur du tube. Ces éléments de reformage déforment le tube pendant l'étape de refroidissement, c'est-à-dire que l'on refroidit pendant un temps maitrisé le corps tubulaire dans une géométrie qui n'est pas circulaire. Cela permet de contrer les éventuels effets sur la rondeur de la discontinuité de l'étiquette lorsque ses bords ne sont pas reliés.

Dans l'étape (11) qui est optionnelle le tube subit un traitement thermique qui a pour effet d'optimiser sa rondeur. Le traitement thermique est effectué à une température qui dépend de la nature de la résine extrudée. Pour une extrusion de polyéthylène, la température du traitement thermique est généralement comprise entre 60 et 100°C. La température du traitement dépend également de l'épaisseur du tube et du temps de passage du tube dans le dispositif de traitement. Habituellement ce traitement thermique est réalisé par le passage du tube dans un bain d'eau chaude.

Dans l'étape suivante (12), le tube est entraîné longitudinalement et finalement il est découpé à la longueur souhaitée (étape (13)).

Les étapes (8) à (12) sont effectuées sous l'influence d'une différence de pression, pour former le tube dans sa configuration finale comme il sera expliqué plus loin dans la présente description.

Finalement, une fois ces opérations réalisées, on effectue la coupe du tube formé à la longueur souhaitée, ou alors on enroule le tube formé en fonction des opérations suivantes à réaliser et de la façon dont on souhaite récupérer les produits formés (tubes individualisés ou non, sous forme de rouleau etc.).

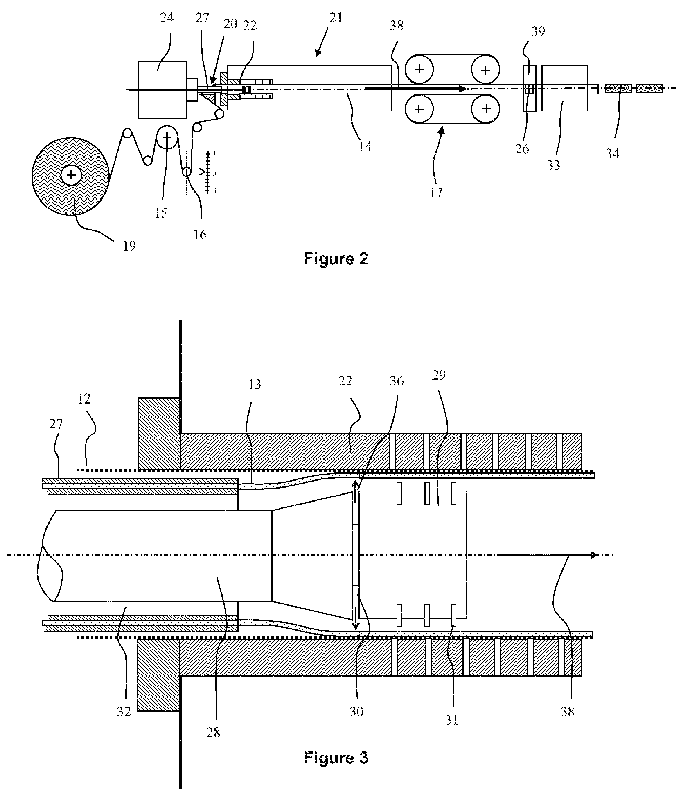

La figure 2 illustre une vue de côté d'une machine de production selon l'invention qui permet la mise en oeuvre du procédé selon la présente invention. Le principe de la machine est similaire à celui décrit dans la publication WO 2015/159234 incorporé par référence en ce qui concerne les caractéristiques générales d'une telle machine et son principe de fonctionnement.

La machine est alimentée, d'une part, par un film décor 12 qui est par exemple enroulé sous forme d'une bobine 19 de film. Bien entendu, le film décor 12 peut être fourni sous une autre forme adéquate. Le film décor 12 passe par une série de rouleaux dont l'un est un rouleau entraîneur 15 qui permet de dérouler le film de façon active et avec une tension optimale. On trouve également un bras danseur 16 après le rouleau entraîneur 15 qui permet de maintenir une tension constante dans le film décor 12 avant son entrée dans la machine par le conformateur (col de cygne 20). Afin de réduire les efforts sur le film décor, la tension du film à l'entrée du conformateur est régulée. Plus précisément, la vitesse de rotation du moteur 15 est régulée par la position du bras danseur 16 situé entre le rouleur entraîneur 15 et le conformateur 20. La masse du bras danseur 16 est ajustée en fonction de la tension désirée dans le film décor 12.

Ces éléments de la machine d'extrusion-étiquetage réalisent les étapes 1 à 6 du procédé tel que décrit ci-dessus et illustré dans la figure 1.

A l'entrée de la machine, on trouve également une extrudeuse 23 avec une tête d'extrusion 24 et une buse d'extrusion 27 de laquelle va sortir la matière utilisée pour faire le tube selon le procédé utilisé dans la présente invention, selon l'étape 7 de la figure 1.

Dans le bac à vide et de refroidissement 21, on trouve un calibre 22 dans lequel passent le film décor 12 conformé en géométrie tubulaire et le tube extrudé à l'intérieur dudit film selon les étapes 8 et 9 du procédé. Le tube 14 est ensuite refroidi et se déplace selon le sens de défilement 38. Il est entraîné à l'extérieur du bac 21 par des chenilles d'entraînement 17 ou un autre moyen équivalent permettant de faire avancer le tube 14 produit à la vitesse souhaitée.

Le poste suivant dans le sens aval de la machine comprend une douille magnétique 39 qui est située autour du tube 14 et un bouchon magnétique 26 qui lui est situé à l'intérieur du tube 14. Ce bouchon 26 est utilisé pour maintenir une pression à l'intérieur du tube 14 lors de la production de celui-ci, comme il sera expliqué plus bas dans la description. En résumé, le bouchon 26 est maintenu en position fixe dans la douille 39 par le biais d'une force magnétique tandis que le tube se déplace dans le sens aval de production de la machine. La référence 33 indique un couteau circonférentiel qui est utilisé pour la découpe des tubes individuels à la dimension souhaitée dans le cycle de production. Finalement la référence 34 indique des tubes produits avec le film décor 12 sur leur surface externe qui ont été découpés à la longueur souhaitée.

La figure 3 illustre des détails de construction du côté de la buse d'extrusion 27 à l'entrée de la machine de production. En partant depuis la gauche de cette figure, on a illustré le film décor 12 qui est conformé en géométrie tubulaire et introduit dans le calibre 22. La buse d'extrusion 27 est également introduite dans le calibre 22 et un corps extrudé sous forme de tube 13 est formé à la sortie de la buse 27, à l'intérieur du film décor conformé en géométrie tubulaire 12. A l'intérieur de la buse 27 se trouve une tige de soufflage 28 qui permet de créer un jet d'air 36. Ce jet d'air met en contact la surface externe du corps tubulaire extrudé 13 et la face interne du film décor 12. L'intensité du jet d'air est optimisée par le débit d'air et la géométrie d'une fente de soufflage 30. Si l'intensité du jet d'air est insuffisante, le contact entre le corps tubulaire extrudé 13 et le film décor 12 est irrégulier et de petites bulles d'air se retrouvent emprisonnées à l'interface du corps extrudé et du film décor. Ces bulles d'air nuisent à l'esthétique finale du tube et sont considérées comme des défauts: elles doivent donc être évitées autant que possible. En conséquence, l'intensité du jet d'air est optimisée principalement en fonction de la rhéologie du corps extrudé, de l'épaisseur de la paroi du corps extrudé et de la vitesse linéaire du procédé d'étiquetage de façon à éviter de telles bulles d'air.

La tige de soufflage 28 comprend au moins la fente de soufflage 30 et un bouchon de démarrage 29. Les rondelles 31 du bouchon de démarrage 29 réduisent la section de passage de l'air dans le sens de défilement 38 et permettent de gonfler le corps extrudé pendant l'étape de démarrage du processus de fabrication. Le diamètre des rondelles 31 est légèrement inférieur au diamètre interne du corps tubulaire 13 pour éviter le contact desdites rondelles avec la matière encore à l'état fondu dudit corps tubulaire 13. Selon un mode de réalisation alternatif, le bouchon de démarrage 29 comporte un dispositif de rétraction des rondelles 31. Au démarrage, les rondelles 31 viennent obstruer la cavité interne du corps tubulaire 13 afin de gonfler le corps extrudé. Après démarrage, les rondelles 31 sont déformées, ou rétractées ou encore déplacées, afin de diminuer leur encombrement radial et éviter leur contact avec la matière à l'état fondu du corps tubulaire13.

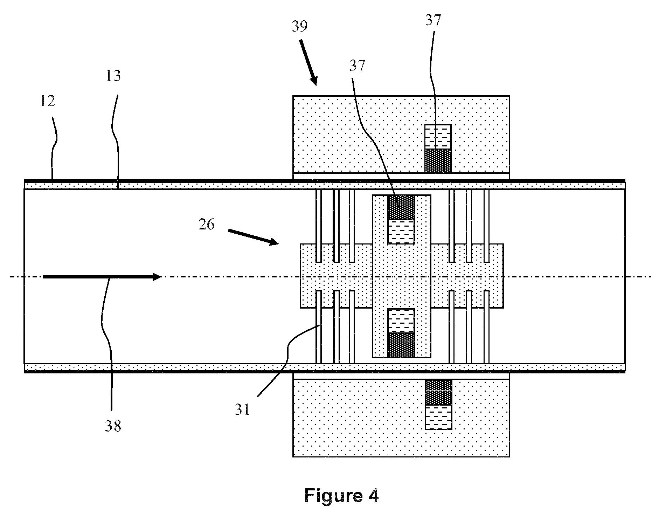

Afin de maintenir une pression donnée dans le tube formé en aval du bouchon de démarrage 29, on utilise un bouchon magnétique 26 comme illustré à la figure 4. Ce bouchon magnétique 26 est inséré à l'intérieur du corps tubulaire 13 dont la paroi s'est solidifiée (voir en figure 2 sa position en aval de la machine). Avantageusement, le bouchon magnétique 26 est inséré à l'intérieur du corps tubulaire 13 après le bac à vide et de refroidissement 21. Selon un mode préférentiel de réalisation de l'invention, le bouchon magnétique 26 est inséré dans le corps tubulaire après la chenille d'entraînement 17 et avant le couteau circonférentiel 33. Bien entendu, d'autres emplacements équivalents sont possibles.

Le bouchon magnétique 26 comporte au moins un aimant et une rondelle, mais de préférence une pluralité d'aimants 37 et de rondelles 31 qui limitent et/ou empêchent l'échappement de l'air sous pression présent à l'intérieur du tube dans la direction d'extrusion. Selon un mode de réalisation préférentiel, le bouchon magnétique 26 bloque l'échappement de l'air dans le sens de défilement du tube 38. A cet effet, le bouchon magnétique 26 interagit avec la douille magnétique 39 comportant également des aimants 37 afin de rester dans une position stable et fixe par rapport à la douille 39. Selon le mode préférentiel de réalisation de l'invention, les aimants 37 du bouchon magnétique 26 et de la douille magnétique 39 sont disposés afin d'exercer une force répulsive entre le bouchon magnétique 26 et la douille 39. Le bouchon magnétique 26 et la douille magnétique 39 sont optimisés en fonction de la force axiale répulsive nécessaire. Le bouchon magnétique 26 et la douille magnétique 39 peuvent contenir plusieurs rangées d'aimant 37 pour augmenter la force axiale. Une variante de l'invention consiste à utiliser des électroaimants pour maintenir le bouchon 26 en position dans la douille 39, malgré un déplacement linéaire du tube14 produit.

L'action conjointe du jet d'air 36 alimenté par la tige de soufflage 28 et du bouchon magnétique 26 crée une première différence de pression ΔP1 entre l'intérieur et l'extérieur du tube 14. Cette première différence de pression s'établit depuis la formation du corps extrudé 13 (figure 3) jusqu'à la position du bouchon magnétique 26 situé en amont du couteau circonférentiel 33 (figure 4). Selon l'invention, la différence de pression ΔP1 est générée par le bouchon magnétique 26 situé en aval du conformateur qui obstrue au moins partiellement l'échappement de l'air de façon à maintenir cette différence de pression. Selon un mode préférentiel de réalisation le bouchon magnétique 26 obstrue totalement le tube et empêche l'échappement de l'air du côté aval.

Selon l'invention, la différence de pression ΔP1 est générée également par un échappement contrôlé de l'air du coté amont du conformateur, au travers de la tête d'extrusion. Le flux d'air alimenté par la tige de soufflage 28 s'échappe de préférence par le canal d'échappement 32 situé entre la buse d'extrusion 27 et le film décor 12.

Selon l'invention, une deuxième différence de pression ΔP2 est créée dans le bac à vide et de refroidissement 21. Cette différence de pression ΔP2 vient s'ajouter à la différence de pression ΔP1. La différence de pression ΔP2 est appliquée dans le calibre 22 après que le corps extrudé 13 a été mis en contact avec le film décor 12.

L'élément de calibration 22 est refroidi par de l'eau. Selon le mode préférentiel de réalisation le calibre 22 est plongé dans un bain d'eau dans le bac 21, la température de l'eau étant régulée. Un mode de réalisation alternatif consiste à refroidir le calibre 22 par aspersion. La réduction des frottements entre le film décor 12 et la surface interne du calibre 22 est importante pour obtenir un procédé stable et éviter la détérioration de l'impression. L'utilisation de revêtements "glissants" en surface du calibre 22 comme par exemple les revêtements de type Téflon permettent de diminuer sensiblement les forces de frottement. Une voie complémentaire ou alternative consiste également à réduire la surface de contact en utilisant des surfaces de contact grainées ou sablées sur la surface interne du calibre. La lubrification joue également un rôle important pour réduire les forces de frottement dans le calibre 22. Par exemple, de l'eau déminéralisée peut être utilisée avantageusement pour lubrifier au moins partiellement l'interface. D'autres moyens équivalents sont bien sûr envisageables. Le calibre 22 peut comporter une géométrie conique suivie d'une géométrie cylindrique. La géométrie conique est utilisée pour ajuster la géométrie du tube au retrait de l'étiquette sous l'effet de la chaleur. D'autres géométries de calibre créant un effet équivalent peuvent être utilisées.

L'invention, à savoir le procédé et la machine, permet d'améliorer la rondeur des tubes obtenus par le procédé d'extrusion étiquetage.

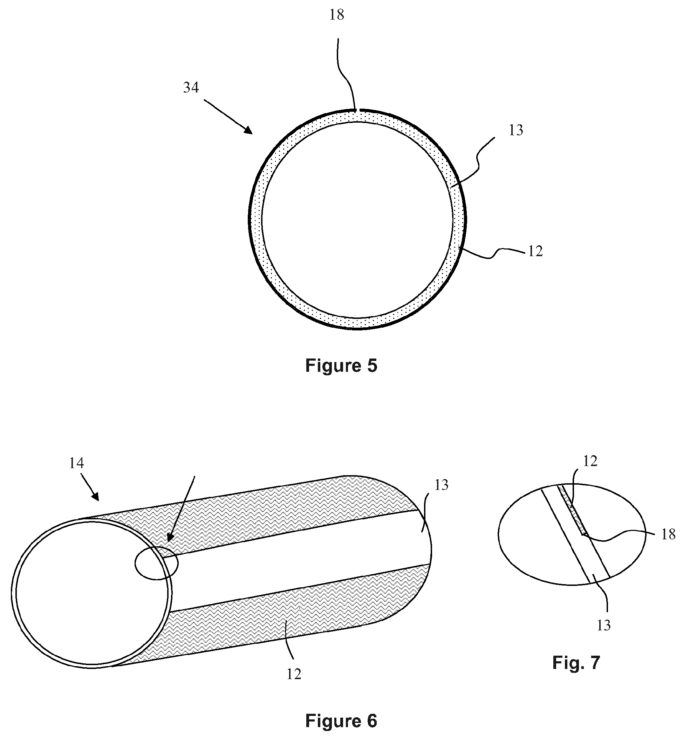

L'invention d'obtenir des tubes comme illustré en figure 6.

Une particularité de l'invention réside dans le fait que la surface de frottement du tube 14 dans les outillages de calibration est formée par la surface externe du film décor 12 qui n'est pas à l'état fondu. Cela a pour effet de faciliter l'opération de calibration du diamètre externe du tube. Les propriétés tribologiques entre la surface interne du calibre et la surface externe du tube sont radicalement modifiées par rapport à une opération d'extrusion classique. Le procédé permet ainsi l'utilisation de nouvelles matières extrudées ou l'augmentation des vitesses d'extrusion.

La figure 6 illustre les tubes 14 obtenus par le procédé. Le film décor 12 forme tout ou partie de la surface externe du tube 14. Le détail 7 montre l'incrustation de l'extrémité 18 du film décor dans la paroi du corps tubulaire 13. Il y a continuité de la surface externe du tube 14 au niveau de l'extrémité du film décor 12. L'épaisseur de l'étiquette 12 est faible devant l'épaisseur du corps tubulaire 13.

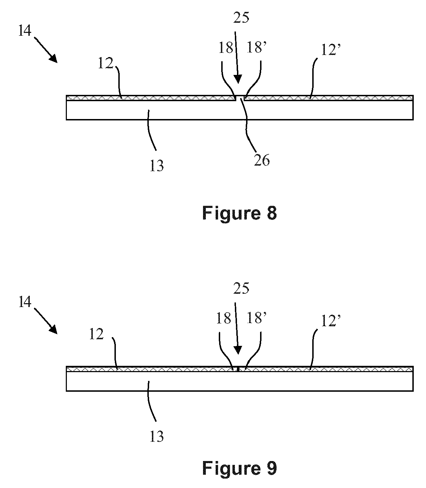

Les figures 8 et 9 illustrent la réalisation de l'invention avec une étiquette sur toute la périphérie du tube.

La figure 8 montre un premier exemple de réalisation d'une décoration 360° du tube ou les extrémités 18 et 18' de l'étiquette 12 sont disposées bout à bout et légèrement espacées. L'espacement des extrémités de l'étiquette 12 peut être lié à la précision de la coupe latérale de l'étiquette 12. De faibles espacements 25 des extrémités 18 et 18' inférieurs à 100 microns et invisibles à l'oeil nu sont parfois obtenus. L'espacement 25 est comblé par la résine formant le corps tubulaire 13, créant ainsi une surface externe du tube 14 lisse et sans discontinuité au niveau des extrémités 18 et 18'.

La figure 9 illustre un deuxième exemple de réalisation ou les extrémités 18 et 18' de l'étiquette 12 sont disposées bout à bout et mises en contact. Dans cette configuration, on observe une continuité du film décor et de la surface externe du tube 14. Comme l'épaisseur de l'étiquette 12 est faible devant l'épaisseur du corps tubulaire 13, les extrémités 18 et 18' sont imperceptibles. Ce mode de réalisation est particulièrement intéressant pour assurer une décoration 360° ou assurer la continuité des propriétés barrières lorsque la couche barrière est portée par l'étiquette 12. Ce second mode de réalisation peut nécessiter des moyens de coupe latérale de l'étiquette 12 situés en amont du col de cygne 20. Ces moyens de coupe permettent un ajustement précis de la largeur du film décor pour obtenir le positionnement bout à bout illustré figure 9.

Un autre exemple de réalisation de l'invention consiste à former un recouvrement entre les extrémités 18 et 18' du film décor 12. Ce mode de réalisation est particulièrement intéressant lorsque la surface inférieure du film 12 peut être soudée sur sa surface supérieure. Avantageusement, le recouvrement est soudé lors des étapes de mise en contact (8) et de calibration-refroidissement (9). Selon ce mode de réalisation préférentiel, le recouvrement est soudé grâce à la chaleur apportée par le corps tubulaire extrudé à l'état fondu. Un mode de réalisation alternatif consiste à ajouter une opération de préchauffage avant l'étape (8) ou une opération de soudage du recouvrement antérieure, simultanée, ou postérieure à l'étape (8).

Afin de renforcer la résistance du corps tubulaire au niveau des extrémités 18 et 18' du film décor, un autre exemple de réalisation de l'invention consiste à créer une augmentation de l'épaisseur du corps tubulaire à l'endroit de la jonction des extrémités du film. Cette augmentation locale de l'épaisseur du tube permet d'obtenir une résistance homogène du tube sur sa circonférence.

Un autre exemple de réalisation de l'invention consiste à ajouter une bande de renfort entre le film décor 12 et le corps tubulaire 13 qui relie les extrémités du film décor. Avantageusement, la bande de renfort est soudée grâce à la chaleur apportée par le corps tubulaire 13 à l'état fondu. Si nécessaire une opération de préchauffage ou une opération de soudage peut être ajoutée pour fixer la bande de renfort sur la face interne du film 12.

Le corps tubulaire extrudé ou co-extrudé 13 est généralement composé de résine thermoplastique de la famille des polyoléfines (par exemple polyéthylène basse densité linéaire, polyéthylène basse densité, polyéthylène haute densité, mélanges de polyéthylène, polypropylène), mais l'invention ne se limite pas à l'usage des résines précédemment décrites. Par exemple, la structure multicouche avec une résine d'éthylène vinyle alcool comme barrière à l'oxygène et une résine polyoléfine est couramment utilisée pour améliorer les performances barrières de l'emballage. Le corps tubulaire 13 représente au moins 70% de l'épaisseur du tube 14 et préférentiellement au moins 80% de l'épaisseur du tube 14.

L'étiquette 12 forme au moins une partie de la surface externe du tube 14. Ce film décor permet par exemple l'identification du produit emballé, du fabricant, apporte la décoration, etc. Selon le mode préférentiel de réalisation, le film décor est de fine épaisseur. Il est de préférence multicouche et peut être composé d'une grande variété de matière incluant le papier, l'aluminium et les matières plastiques. Le film support peut également être composé en partie d'un film textile pour apporter des propriétés sensorielles spécifiques. Le film décor 12 comprend au moins une couche (à savoir sa couche interne) qui sous l'effet de la chaleur apporté par le corps tubulaire 13 permet l'adhésion du film décor sur ledit corps extrudé.. La structure multicouche peut comprendre par exemple des couches en polyéthylène, polypropylène, polyéthylène téréphtalate, polyamide, éthylène vinyle alcool, papier, aluminium, des couches de métallisation ou d'oxyde de silicium, des couches adhésives, etc. Préférentiellement l'épaisseur du film décor est comprise entre 5 et 100 microns, et avantageusement entre 10 et 50 microns.

Des propriétés spécifiques du film décor sont nécessaires pour la mise en oeuvre du procédé et sont décrites ci-dessous. Dans l'étape (8) du procédé illustré dans la figure 1, le corps extrudé 13 est mis en contact avec la surface interne du film décor 12. Une fois le contact établi, le corps extrudé à l'état fondu transmet une partie de son énergie thermique au film décor pendant l'étape (9) de calibration, ce qui a pour effet le soudage du film sur l'extrudat. Pour éviter que le film ne se dégrade sous l'effet de la chaleur apportée par l'extrudat, un film décor multicouche est utilisé de façon préférentielle. La structure multicouche du film permet l'association d'une première couche qui va fondre au moins partiellement au contact du corps extrudé, et d'une seconde couche dont la température de fusion est supérieure d'au moins 20°C et de préférence supérieure de 40°C à celle de ladite première couche de sorte que la seconde couche ne sera pas affectée par l'énergie thermique du corps extrudé.

Les propriétés thermiques de la seconde couche permettent notamment d'éviter des retraits importants du film sous l'effet de la chaleur apportée par l'extrudat. En effet, un fort retrait du film aurait un effet négatif non seulement sur la décoration mais également sur l'homogénéité de l'épaisseur du tube. Expérimentalement, il a été déterminé qu'un retrait du film inférieur à 5% est nécessaire pour obtenir des emballages de qualité. Préférentiellement, ce retrait est inférieur à 2%.

Le film décor est également sollicité en traction lors de la mise en oeuvre du procédé et principalement lors des étapes (6) et (8) à (12) du procédé. Dans l'étape (6) la conformation du film en géométrie tubulaire génère des frottements entre le film et les outillages. Dans les étapes (8) et (9), le corps tubulaire qui est encore majoritairement à l'état fondu est entraîné par le film décor. La force de traction sur le film décor est comprise entre 10N et 100N et dépend des frottements entre le film et les outillages et du diamètre du tube. Cet effort de traction génère des contraintes élevées dans le film qui est généralement de faible épaisseur.

Les structures multicouches de film décor qui présentent conjointement des propriétés thermiques et mécaniques adaptées sont par exemple des structures comportant une couche de polymère bi-orientée du type PET, PP ou PA.

Le film décor doit donc présenter à la fois des propriétés thermiques et des propriétés mécaniques lui conférant une stabilité dimensionnelle quand le film est chauffé par l'extrudat et mis en tension par l'effort de traction axiale appliquée dans le procédé.

Selon un mode préférentiel de réalisation de l'invention l'étiquette 12 comporte dans sa structure au moins une couche dont la température de fusion est supérieure à 160°C et au moins une couche de même nature que le corps tubulaire. La couche qui présente une bonne stabilité thermique peut être composée par exemple de polyéthylène téréphtalate bi-orienté (PET), de polyamide (PA), d'aluminium (Alu) ou encore de papier. Pour un corps tubulaire en polyéthylène, voici des exemples de structure de film décor : PET/PE, PE/PET/PE, PA/PE, Alu/PE, PE/Alu/PE, Papier/PET/PE.

L'étiquette 12 peut être imprimée selon toutes les méthodes connues d'impression à plat comme par exemple, la flexographie, la sérigraphie, l'héliogravure, l'impression par typographie, l'impression offset, hot stamping, cold foil, ou encore l'impression digitale et combinaison de ces technologies d'impression. L'invention sera associée avantageusement à l'impression numérique pour les productions nécessitant flexibilité et changement rapide de décoration. L'impression est généralement recouverte par un vernis protecteur apportant également des effets de brillance ou matité par exemple. Le choix du vernis est important, en particulier son coefficient de frottement sur les outillages de mise en forme et calibrage.

L'invention peut être avantageusement associée à une impression numérique en ligne de l'étiquette 12. Dans ce cas de figure, le rouleau de film décor 19 illustré figure 2 est remplacé par une machine d'impression numérique fonctionnant de manière synchronisée avec la ligne d'extrusion étiquetage. Selon une variante de cette configuration, une ou plusieurs opérations de complexage peuvent être également effectuées en ligne avant le procédé d'extrusion décoration. Par exemple une opération de complexage est nécessaire lorsque l'on souhaite que l'impression se retrouve emprisonnée dans l'épaisseur du film décor 12. Une configuration possible permettant d'avoir la couche imprimée emprisonnée résulte de la succession des étapes suivantes :
- Déroulement d'un premier film non décoré
- Impression numérique du premier film
- Complexage d'un deuxième film sur le premier film afin d'emprisonner l'impression - Obtention du film décor
- Découpe latérale des bords du film décor
- Exécution du procédé d'extrusion décoration selon les principes de l'invention.

L'impression du film décor 12 peut être réalisée en recto ou en verso de telle sorte que l'impression se retrouve en surface du tube 14 ou emprisonnée dans l'épaisseur du tube. L'impression est avantageuse pour réaliser des décorations complexes à moindre coût car l'opération de décoration est réalisée à plat sur un film de fine épaisseur.

L'invention est particulièrement avantageuse pour réaliser à moindre coût des tubes avec une décoration de haut de gamme.

L'invention est particulièrement avantageuse pour améliorer les propriétés sensorielles des tubes en apportant avec le film décor une couche de surface ayant un "toucher" particulier. Ces propriétés sont apportées par exemple par un film polypropylène biorienté mat, ou un film textile.

L'invention est particulièrement avantageuse car elle permet de modifier la fonctionnalité de l'emballage en changeant de film décor. Ces fonctionnalités peuvent être d'ordre esthétique (décoration), sensorielles (toucher), techniques (propriétés barrières) ou informatives (communication sur l'emballage).

L'invention est particulièrement avantageuse car le film décor fait partie intégrante de l'emballage. Il est intégré dans sa structure et contribue à ses propriétés.

L'invention ne se limite pas à la réalisation des quelques exemples de structures multicouches cités dans le texte. Il est évident pour l'homme du métier que l'invention permet d'augmenter le nombre de structure réalisable et permet l'association de matières très différentes (plastiques, papier, aluminium, ...).

L'invention permet par défaut de réaliser des corps tubulaires sans décoration mais comportant un film en surface. Cette variante peut être utilisée plus spécifiquement pour améliorer les propriétés mécaniques, barrières ou sensorielles (toucher) des tubes.

L'invention peut être utilisée dans le domaine de l'emballage principalement pour l'apport d'un décor mais également dans des domaines techniques pour l'amélioration des propriétés mécaniques ou barrières. Un mode avantageux de réalisation de l'invention consiste à apporter la barrière et le décor par l'intermédiaire du film. Le film multicouche qui apporte la barrière et le décor est associé à un corps extrudé monocouche, ce qui permet de simplifier le dispositif d'extrusion.

Pour l'extrusion de produit difficile, l'invention peut être utilisée pour diminuer les coûts de production en augmentant la vitesse de production.

Une première variante de l'invention conduit à la succession des opérations suivantes réalisées en utilisant les principes de l'invention exposés ci-dessus:
- Réalisation par soudage d'un premier corps tubulaire à partir d'un film multicouche
- Extrusion d'un deuxième corps tubulaire à l'état fondu sur ledit premier corps tubulaire
- Conjointement, dépôt de l'étiquette sur la surface externe du second corps tubulaire selon le procédé de l'invention.

Une deuxième variante de l'invention consiste à emprisonner l'étiquette dans la paroi du tube. Pour cela, les opérations suivantes sont mises en oeuvre:
- Extrusion d'un premier corps tubulaire à l'état fondu
- Conjointement, dépôt de l'étiquette sur la face externe du premier corps tubulaire selon le procédé de l'invention
- Puis, extrusion d'un deuxième corps tubulaire et dépôt dudit deuxième corps tubulaire à l'état fondu sur la face externe de l'étiquette.
L'étiquette utilisée dans la deuxième variante comporte préférablement 3 couches. Les couches en surface du film permettent la soudure avec les couches extrudées et la troisième couche emprisonnée apporte les propriétés thermiques et mécaniques.

Le second corps tubulaire à l'état fondu est déposé sur la face externe de l'étiquette préférentiellement lorsque le premier corps tubulaire est au moins partiellement refroidi.

Une troisième variante de l'invention consiste à rapporter un film sur la surface externe d'un corps tubulaire extrudé et comportant des agents d'expansion. Le procédé suivant est mis en oeuvre:
- Extrusion du corps tubulaire à l'état fondu à partir d'une résine comportant des agents d'expansion
- Disposition du film autour du corps tubulaire grâce à un conformateur en col de cygne.
- Mise en contact du de la surface externe du corps tubulaire avec la face interne ou couche interne du film grâce à l'action conjuguée des agents d'expansion et du jet d'air
- Calibration du corps tubulaire et refroidissement.

Les agents d'expansion utilisés peuvent être des agents d'expansion physique ou chimique. Les agents d'expansion physiques mélangés au polymère sont par exemple du gaz carbonique ou de l'azote dont le changement d'état (liquide à gazeux) crée l'expansion du polymère à l'état fondu. Les agents d'expansion chimique peuvent être des azodicarbonamide ou azobisformamide. L'avantage de l'invention pour la réalisation de corps tubulaire ou cylindrique expansés est la combinaison des propriétés de surface et décoration apportées par le film et les propriétés d'allègement apportées à coeur par les agents d'expansion.

Les modes d'exécution de l'invention sont donnés à titre d'exemple illustratifs et ne doivent pas être considérés comme limitatifs. Ils peuvent être combinés entre eux ou faire appel à des moyens équivalents en fonction des circonstances dans le cadre de la présente invention. Par exemple, si le film est monocouche, il est préférable d'utiliser un film épais afin d'obtenir les mêmes caractéristiques que celles du film multicouche, à savoir bonne soudure sur le corps tubulaire et bonne stabilité mécanique lors de la traction sur le film dans la machine de production. Le choix entre un film monocouche (épais) et multicouche (plus fin) peut être dicté par le produit final à obtenir.

### Références numériques

- 12: Film décor ou étiquette
- 13: corps extrudé
- 14: Tube
- 15: Rouleau d'entrainement
- 16: Bras danseur
- 17: Chenille d'entrainement
- 18: Extrémités du film
- 19: Bobine de film
- 20: Conformateur (col de cygne)
- 21: Bac à vide et de refroidissement
- 22: Calibre
- 23: Extrudeuse
- 24: Tête d'extrusion
- 25: Espacement entre les extrémités du film
- 26: Bouchon magnétique
- 27: Buse d'extrusion
- 28: Tige de soufflage
- 29: Bouchon de démarrage
- 30: Fente de soufflage
- 31: Rondelle
- 32: Canal d'échappement
- 33: Couteau circonférentiel
- 34: Segment de tube décoré
- 35: Défaut de forme
- 36: Jet d'air
- 37: Aimants
- 38: Sens de défilement
- 39: Douille magnétique

## Revendications

1. Procédé d'extrusion et d'étiquetage d'un tube d'emballage comprenant les étapes successives suivantes réalisées sur une ligne d'extrusion-étiquetage:
a) formation d'une étiquette (12) partiellement ou totalement tubulaire à partir d'un film dans un conformateur (20);
b) introduction de l'étiquette dans un élément de calibration (22);
c) extrusion d'un corps tubulaire (13) du côté de la face concave de l'étiquette (12) dans une tête d'extrusion (24);
d) mise en contact de la face externe du corps tubulaire extrudé avec la face concave de l'étiquette;
procédé dans lequel l'étiquette (12) comprend au moins une couche dont la température de fusion est d'au moins 20°C supérieure à la température de fusion du corps tubulaire extrudé (13).

2. Procédé selon la revendication 1 dans lequel l'étape d) est réalisée au moyen d'un jet d'air.

3. Procédé selon la revendication 1 ou 2 dans lequel l'étape d) est réalisée également au moyen d'une première différence de pression (ΔP1) que l'on instaure entre l'intérieur et l'extérieur du corps tubulaire.

4. Procédé selon l'une des revendications précédentes dans lequel la première différence de pression (ΔP1) est générée par un premier bouchon (26) situé en aval du conformateur (20) qui obstrue au moins partiellement l'échappement de l'air par l'intérieur du corps tubulaire (14).

5. Procédé selon l'une des revendications précédentes dans lequel la première différence de pression (ΔP1) est générée également par un échappement contrôlé de l'air du côté amont du conformateur (20), au travers de la tête d'extrusion (24).

6. Procédé selon l'une des revendications précédentes dans lequel le bouchon (26) est maintenu à l'intérieur du tube par des forces magnétiques.

7. Procédé selon l'une des revendications précédentes dans lequel le premier bouchon (26) se situe après un moyen de traction (17) du tube.

8. Procédé selon la revendication précédente dans lequel la première différence de pression (ΔP1) facilite la traction du tube par le moyen de traction (17).

9. Procédé selon l'une des revendications précédentes dans lequel on instaure une deuxième différence de pression (ΔP2) entre l'intérieur et l'extérieur du tube (14).

10. Procédé selon la revendication précédente dans lequel la deuxième différence de pression (ΔP2) est créée par une dépression dans un bac à vide (21).

11. Procédé selon l'une des revendications précédentes dans lequel l'étape c) est réalisée dans l'élément de calibration (22).

12. Procédé selon l'une des revendications précédentes dans lequel l'élément de calibration (22) est refroidi.

13. Procédé selon l'une des revendications précédentes dans lequel l'élément de calibration (22) comporte une surface de contact qui permet de réduire le frottement avec l'étiquette (12).

14. Procédé selon l'une des revendications précédentes dans lequel la surface de frottement entre l'élément de calibration (22) et l'étiquette (12) n'est pas lubrifiée ou au moins partiellement lubrifiée ou grainée.

15. Procédé selon la revendication précédente dans lequel la lubrification de la surface de frottement de l'élément de calibration (22) est réalisée au moins par l'eau de refroidissement.

16. Procédé selon l'une des revendications précédentes dans lequel l'eau servant à la lubrification et au refroidissement est au moins partiellement déminéralisée.

17. Procédé selon l'une des revendications précédentes dans lequel l'eau servant à la lubrification et au refroidissement est de l'eau obtenue par osmose.

18. Procédé selon l'une des revendications précédentes dans lequel la tension de l'étiquette (12) à l'entrée du conformateur (20) est régulée.

19. Procédé selon l'une des revendications précédentes, dans lequel le tube subit un traitement thermique pour optimiser sa rondeur.

20. Dispositif pour la mise en oeuvre d'un procédé selon l'une des revendications précédentes, ledit dispositif comprenant au moins un bouchon (26) qui obstrue au moins partiellement l'échappement de l'air par l'intérieur du corps tubulaire formé, ledit bouchon étant maintenu en position fixe dans le dispositif malgré le déplacement longitudinal du corps tubulaire formé dans ledit dispositif.

21. Dispositif selon la revendication précédente, comprenant une douille magnétique (39) qui bloque le mouvement du bouchon (26).

22. Dispositif selon la revendication précédente, dans lequel le bouchon comprend des moyens magnétiques (37) coopérant avec la douille magnétique pour bloquer le mouvement du bouchon.
